# EUROPEAN PATENT SPECIFICATION

(11) **EP 4 135 116 B1**
(45) Date of publication and mention of the grant of the patent: **15.05.2024**
(21) Application number: 22187004.1
(22) Date of filing: 26.07.2022
(51) Int. Cl.: H01M 50/507, H01M 50/574, H01M 50/209, H01M 50/204, H01M 10/42

(54) **BUS BAR MODULE, BATTERY MODULE, AND MANUFACTURING METHOD FOR REUSED BATTERY MODULE**
SAMMELSCHIENENMODUL, BATTERIEMODUL UND VERFAHREN ZUR HERSTELLUNG EINES WIEDERVERWENDBAREN BATTERIEMODULS
MODULE DE BARRE DE BUS, MODULE DE BATTERIE ET PROCÉDÉ DE FABRICATION D'UN MODULE DE BATTERIE RÉUTILISÉ

(30) Priority: 27.07.2021 JP 2021122107
(43) Date of publication of application: 15.02.2023
(73) Proprietor: Yazaki Corporation, Tokyo (JP)
(72) Inventor: Oga, Tatsuya, Makinohara-shi, Shizuoka (JP); Mukasa, Hirotaka, Makinohara-shi, Shizuoka (JP); Nakagawa, Mariko, Makinohara-shi, Shizuoka (JP); Tsuchiya, Kazuhiko, Makinohara-shi, Shizuoka (JP)
(74) Representative: Grünecker Patent- und Rechtsanwälte PartG mbB

(56) References cited:
- CN-A- 112 297 847
- CN-A- 112 310 562
- CN-U- 202 395 111

## Description

The present invention relates to a bus bar module, a battery module, and a manufacturing method for a reused battery module.

For example, JP 2015 - 198 071 A discloses a bus bar including a plurality of weld parts formed to be separated from each other, and a rupture part that can be ruptured disposed between the weld parts. With this bus bar, in a case in which a welding failure occurs, welding can be performed again without discarding a material corresponding to one module.

In recent years, electric motor vehicles such as a Hybrid Electric Vehicle (HEV) and an Electric Vehicle (EV) are equipped with a large number of batteries. With the recent increase in the number of electric motor vehicles, the disposal of such batteries mounted on electric motor vehicles is expected to increase in the future as more vehicles are scrapped in the future. Thus, it is desired to reduce a discarding amount of such batteries through reuse, recycle, or other means. Accordingly, bus bars such as those disclosed in JP 2015 - 198 071 A described above are desired to have a configuration that can be easily reused, for example.
CN 202 395 111 U discloses a power battery pack which comprises a plurality of single batteries and connecting sheets used for connecting the single batteries. At least some single batteries are connected in series. Each connecting sheet comprises a first connecting terminal and a second connecting terminal which are respectively connected with the electrode terminals of the adjacent single batteries. Short-circuit pins are arranged on both the first connecting terminals and the second connecting terminals. Insulating layers are arranged between the short-circuit pins and the single batteries.
CN 112 310 562 A discloses a battery module which comprises a plurality of battery units used for series connection, a connecting piece and a conductive part.
CN 112 297 847 A discloses a battery module which comprises a battery unit. The battery unit is provided with an electrode terminal. The battery unit comprises a failure battery unit and a non-failure battery unit. The battery module further comprises a conductive part, the conductive part is used for being connected with the electrode terminal of a target battery unit, and the target battery unit is a non-failure battery unit; wherein the failure battery unit is located between the two target battery units.

It is an object of the present invention to provide a bus bar module and a battery module that can be appropriately reused, and a manufacturing method for a reused battery module. According to the present invention said object is solved by a bus bar module having the features of the independent claim 1 and a battery module according to claim 4. Moreover, said object is solved by a reused bus bar module having the features of the independent claim 5 and a reused battery module according to claim 6. Furthermore, said object is solved by a manufacturing method having the features of the independent claim 7. Preferred embodiments are laid down in the dependent claims.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a perspective view representing a schematic configuration of a battery pack according to an embodiment before being reused;
FIG. 2 is an exploded perspective view representing a schematic configuration of the battery pack according to the embodiment before being reused;
FIG. 3 is a partial perspective view representing a schematic configuration of a bus bar before being reused included in the battery pack according to the embodiment;
FIG. 4 is a perspective view representing a schematic configuration of the battery pack according to the embodiment after being reused;
FIG. 5 is a partial perspective view representing a schematic configuration of the bus bar after being reused included in the battery pack according to the embodiment;
FIG. 6 is a flowchart representing a manufacturing method for a reused battery module according to the embodiment;
FIG. 7 is a partial perspective view representing a schematic configuration of a bus bar included in a battery pack according to a modification;
FIG. 8 is a partial perspective view representing a schematic configuration of a bus bar included in a battery pack according to a modification; and
FIG. 9 is a partial perspective view representing a schematic configuration of a bus bar included in a battery pack according to a modification.

### DETAILED DESCRIPTION OF THE PREFERRED EMBODIMENTS

In the following description, regarding a first direction, a second direction, and a third direction intersecting with each other, the first direction is referred to as an "arrangement direction X", the second direction is referred to as a "width direction Y", and the third direction is referred to as a "height direction Z". Herein, the arrangement direction X as the first direction, the width direction Y as the second direction, and the height direction Z as the third direction are orthogonal to each other. The directions used in the following description are assumed to be directions in a state in which respective parts are assembled to each other unless otherwise specified.

### Embodiment

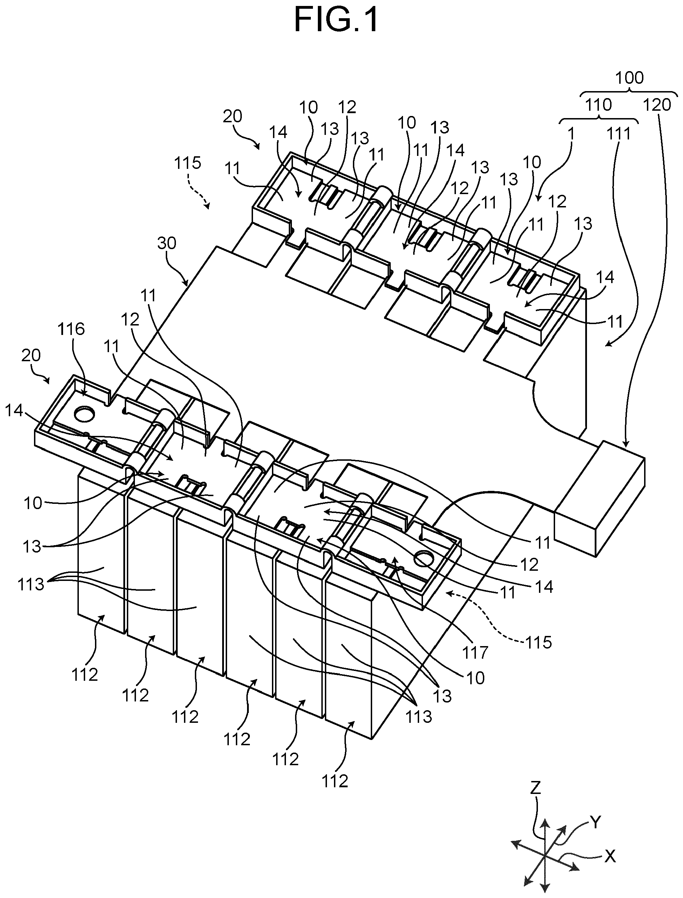

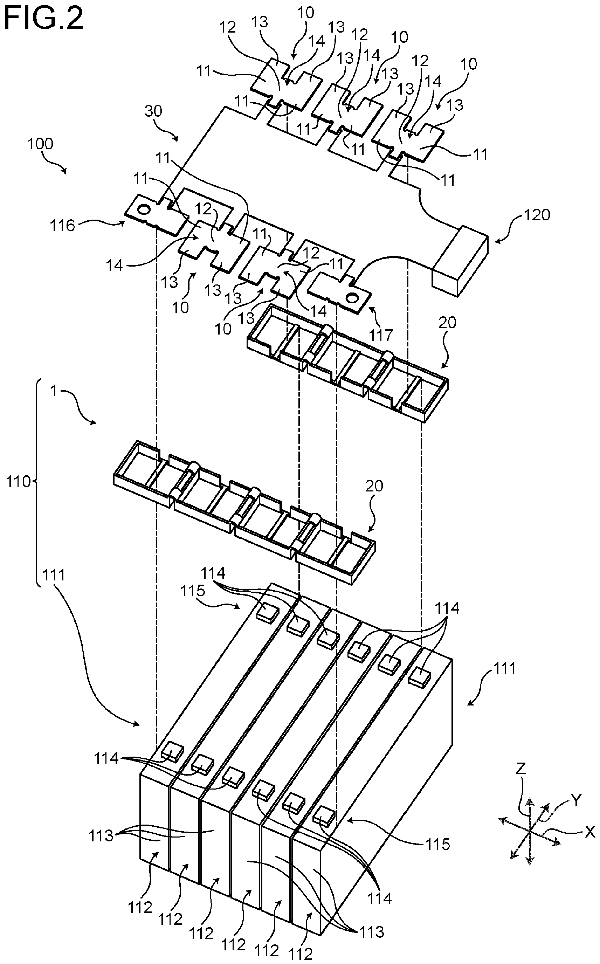

A bus bar module 1 according to the present embodiment illustrated in FIG. 1 and FIG. 2 is applied to a battery pack 100 mounted on a vehicle. For example, the battery pack 100 is mounted on a vehicle including an electric motor such as a motor as a driving source (an electric vehicle, a hybrid vehicle, or the like), and is used for supplying electric power to the electric motor. The battery pack 100 includes a battery module 110 and a monitoring device 120. The battery module 110 includes a set battery 111 and the bus bar module 1.

The set battery 111 is constituted of a plurality of battery cells (single batteries) 112 arranged along the arrangement direction X. The bus bar module 1 is electrically connected to the battery cells 112 constituting the set battery 111. The monitoring device 120 is an arithmetic device constituting a battery monitoring unit that monitors a state (a voltage, a current, a temperature, and the like) of each of the battery cells 112, which is an Electronic Control Unit (ECU), a microcomputer, or the like, for example. The bus bar module 1 electrically connects each of the battery cells 112 to the monitoring device 120. The monitoring device 120 monitors the state of each of the battery cells 112 based on information (voltage information, current information, temperature information, and the like) representing the state of the battery cell 112 obtained via the bus bar module 1, and use the state for various kinds of control such as charge and discharge control.

First, the following describes each of the battery cells 112 as a connection target of the bus bar module 1 with reference to FIG. 1 and FIG. 2, for example. Each of the battery cells 112 includes a cell main body 113 and two electrode terminals 114. The cell main body 113 is a main portion constituting the battery cell 112. Herein, the cell main body 113 is formed in a substantially rectangular parallelepiped plate shape, and respective parts are housed therein. Each of the two electrode terminals 114 is disposed at any position on the cell main body 113 in a state of being exposed to the outside. One of the two electrode terminals 114 is a positive electrode, and the other one thereof is a negative electrode. For example, the electrode terminal 114 may be a plate-shaped electrode terminal disposed on an outer wall surface of the cell main body 113, or may be a pillar-shaped electrode pole projecting from the outer wall surface of the cell main body 113. In the following description, the electrode terminal 114 is assumed to be an electrode formed in a substantially rectangular plate shape. In the set battery 111, the battery cells 112 are continuously arranged in a state in which the electrode terminals 114 on one side of the respective battery cells 112 are arranged in a line, and the electrode terminals 114 on the other side thereof are also arranged in a line. Thus, in the battery module 110, electrode terminal groups 115 each including the electrode terminals 114 arranged in a line are disposed at two points. Herein, in each of the battery cells 112, the cell main body 113 is formed in a substantially rectangular parallelepiped plate shape, and the positive and negative electrode terminals 114 are disposed on one of six outer wall surfaces thereof. Thus, the battery module 110 is formed in a substantially rectangular parallelepiped shape as a whole with the battery cells 112 arranged along the arrangement direction X, and includes six wall surfaces as an aggregate constituted of the battery cells 112. In the battery module 110, the electrode terminal groups 115 are disposed on one of the six wall surfaces as an aggregate. The bus bar module 1 is electrically connected to at least one of the electrode terminal groups 115 of the battery module 110 having the configuration as described above. Herein, the bus bar module 1 is electrically connected to both of the two electrode terminal groups 115.

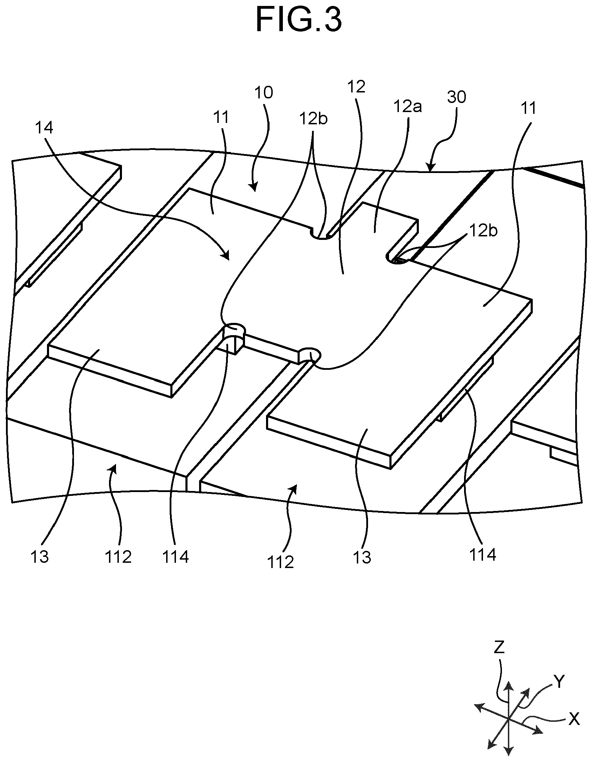

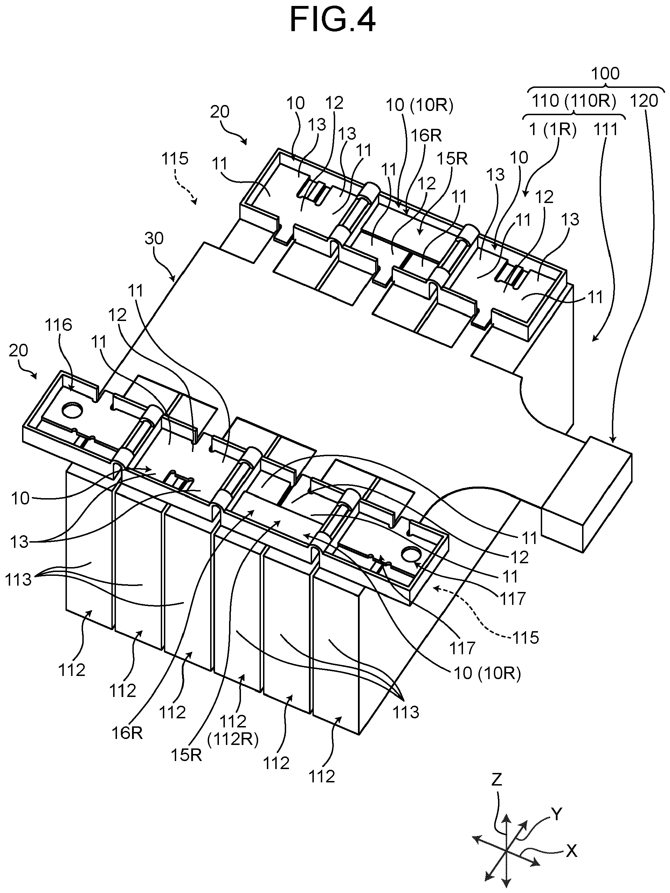

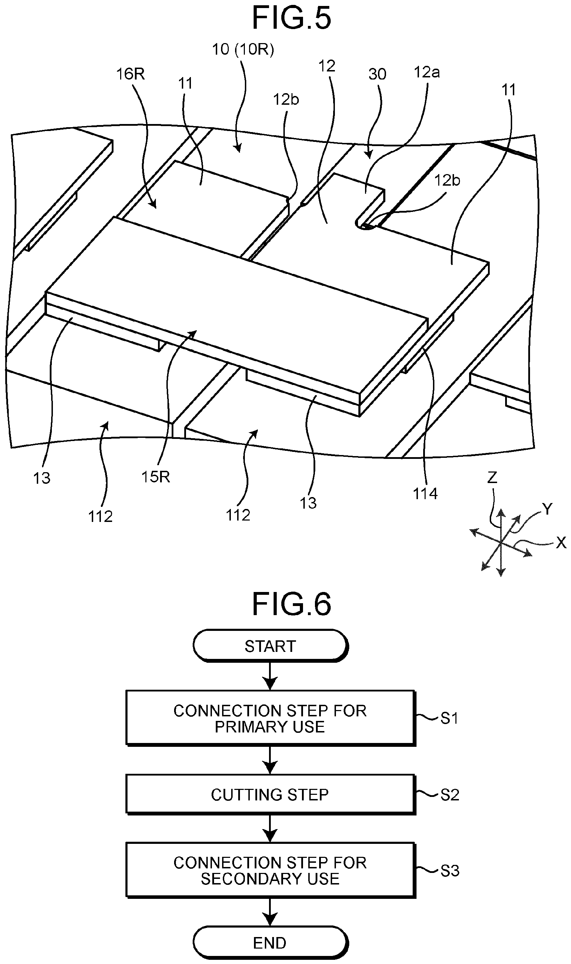

In this configuration, a rejoinable part 13 is added to a bus bar 10 that is electrically connected to the electrode terminal 114 of the battery cell 112, so that the bus bar module 1 according to the present embodiment implements a configuration that can be appropriately reused. FIG. 1, FIG. 2, and FIG. 3 represent the bus bar module 1 and the battery module 110 at the time of primary use before being reused. On the other hand, FIG. 4 and FIG. 5 represent the bus bar module 1 and the battery module 110 at the time of secondary use after being reused. The following describes the configuration of the bus bar module 1 in detail with reference to the drawings.

First, the following describes the bus bar module 1 and the battery module 110 before being reused with reference to FIG. 1, FIG. 2, and FIG. 3, and describes the bus bar module 1 and the battery module 110 after being reused with reference to FIG. 4 and FIG. 5 thereafter. In the following description, the battery module 110 after being reused illustrated in FIG. 4 and FIG. 5 is particularly referred to as a "reused battery module 110R" in some cases. Similarly, the bus bar module 1 after being reused is particularly referred to as a "reused bus bar module 1R", the bus bar 10 after being reused is particularly referred to as a "reused bus bar 10R", and the battery cell 112 after being reused is particularly referred to as a "reused battery cell 112R" in some cases.

Specifically, the bus bar module 1 before being reused illustrated in FIG. 1, FIG. 2, and FIG. 3 includes the bus bar 10, a case 20, and a detection conductor 30. The bus bar 10 is a connection terminal that electrically connects the electrode terminals 114 included in the respective battery cells 112 to each other. The case 20 is a housing that houses and holds the bus bar 10. The detection conductor 30 is a detection line that is electrically connected to the bus bar 10, and electrically connects each bus bar 10 to the monitoring device 120. The bus bar module 1 may further include a thermistor, various sensors, and the like.

A connection target of the bus bar 10 is at least one of the arranged battery cells 112, and the bus bar 10 is electrically connected to one of the two electrode terminals 114 included in the battery cell 112 as the connection target. More specifically, the bus bar 10 constitutes an electrode connecting bus bar that electrically connects one of the two electrode terminals 114 included in the battery cell 112 to one of the two electrode terminals 114 included the other battery cell 112 adjacent thereto along the arrangement direction X. The bus bar 10 electrically connects the electrode terminals 114 of the adjacent battery cells 112 to each other in accordance with a connection scheme of the battery cells 112 required for the battery module 110. In a case of connecting the battery cells 112 in series in the battery module 110, the bus bar 10 connects the electrode terminal 114 constituting a positive electrode in one of the adjacent battery cells 112 to the electrode terminal 114 constituting a negative electrode in the other one of the battery cells 112. In this case, in the battery module 110, the electrode terminal 114 as the positive electrode and the electrode terminal 114 as the negative electrode are alternately disposed in each of the electrode terminal groups 115. In a case of connecting the battery cells 112 in parallel in the battery module 110, the bus bar 10 connects the electrode terminals 114 constituting positive electrodes of the adjacent battery cells 112 to each other, or connects the electrode terminals 114 constituting negative electrodes thereof to each other. In this case, in the battery module 110, the electrode terminals having the same polarity are disposed side by side in each of the electrode terminal groups 115.

The battery module 110 includes the two electrode terminals 114 that are not coupled by the bus bar 10. One of them is a total positive electrode, and the other one thereof is a total negative electrode. Herein, each of the drawings exemplifies a case in which the battery cells 112 are connected in series in the battery module 110, that is, a case in which the electrode terminals 114 serving as the positive electrode and the negative electrode are alternately disposed in each of the electrode terminal groups 115, and both of the total positive electrode and the total negative electrode are positioned in one of the electrode terminal groups 115. In the battery module 110, a total positive electrode bus bar 116 and a total negative electrode bus bar 117 are electrically connected to the electrode terminals 114 as the total positive electrode and the total negative electrode, respectively. Similarly to the bus bar 10, the total positive electrode bus bar 116 and the total negative electrode bus bar 117 may also have a structure that can be reused as described later.

The bus bar 10 according to the present embodiment includes a pair of electrode joining parts 11, a coupling part 12, and a pair of rejoinable parts 13 in the bus bar module 1 before being reused, and these parts are integrally formed of metallic material having electrical conductivity. The bus bar 10 is formed in a substantially U-shaped plate shape as a whole by the pair of electrode joining parts 11, the coupling part 12, and the pair of rejoinable parts 13.

The pair of electrode joining parts 11 is portions that are joined to the different electrode terminals 114. The respective electrode joining parts 11 are joined to the different electrode terminals 114 to be electrically connected to the electrode terminals 114. That is, a first electrode joining part 11 of the pair of electrode joining parts 11 is joined to a first electrode terminal 114 disposed on a first battery cell 112. On the other hand, a second electrode joining part 11 of the pair of electrode joining parts 11 is joined to a second electrode terminal 114 disposed on a second battery cell 112 that is positioned to be adjacent to the first battery cell 112. A form of joining between the electrode joining part 11 and the electrode terminal 114 in the present embodiment is weld-bonding. That is, herein, each of the pair of electrode joining parts 11 is formed to be a welding region having a substantially rectangular shape. Each of the electrode joining parts 11 is electrically connected to the electrode terminal 114 by being welded to the electrode terminal 114 (for example, by laser welding). The form of joining between the electrode joining part 11 and the electrode terminal 114 is not limited to weld-bonding. For example, bolt-joining and the like may be employed in place of the weld-bonding.

The coupling part 12 is a portion that couples the pair of electrode joining parts 11 to each other. The coupling part 12 extends between the pair of electrode joining parts 11 along the arrangement direction X of the battery cells 112, and is formed integrally with the pair of electrode joining parts 11. That is, the pair of electrode joining parts 11 is continuous to each other via the coupling part 12 in the arrangement direction X.

Herein, the coupling part 12 includes a connection tab part 12a. The connection tab part 12a is a portion to which the detection conductor 30 is electrically connected. The connection tab part 12a is formed to project from a center portion in the arrangement direction X of the coupling part 12 toward one side along the width direction Y to have a plate shape.

The coupling part 12 according to the present embodiment can be cut between the pair of electrode joining parts 11 in a state in which the pair of electrode joining parts 11 is respectively joined (welded) to the electrode terminals 114. The coupling part 12 can divide one of the electrode joining parts 11 from the other one of the electrode joining parts 11 by being cut between the pair of electrode joining parts 11.

Herein, the coupling part 12 includes a notch part 12b formed at a part that can be cut. The notch part 12b is a portion as a mark for a part that can be cut in the coupling part 12. Herein, the notch part 12b is formed as a part notched in a recessed shape along the width direction Y. The notch parts 12b are respectively disposed on both sides in the arrangement direction X of the connection tab part 12a in the coupling part 12. The notch parts 12b are disposed, as a pair, on both sides of the coupling part 12 to be opposed to each other in the width direction Y. That is, herein, the pair of notch parts 12b opposed to each other in the width direction Y is assumed to be one group, and two groups of the notch parts 12b (in total) are respectively disposed on both sides in the arrangement direction X of the connection tab part 12a.

The pair of rejoinable parts 13 are portions respectively extending from the pair of electrode joining parts 11. The pair of rejoinable parts 13 respectively extends from the pair of electrode joining parts 11 along the width direction Y, and is formed integrally with the electrode joining parts 11. That is, a first rejoinable part 13 of the pair of rejoinable parts 13 is disposed to be connected to the first electrode joining part 11, and extends from the first electrode joining part 11 along the width direction Y. On the other hand, a second rejoinable part 13 of the pair of rejoinable parts 13 is disposed to be connected to the second electrode joining part 11, and extends from the second electrode joining part 11 along the width direction Y. In other words, the first electrode joining part 11 and the first rejoinable part 13 are integrally formed, and positioned on one side with respect to the coupling part 12 in the arrangement direction X. The second electrode joining part 11 and the second rejoinable part 13 are integrally formed, and positioned on the other side with respect to the coupling part 12 in the arrangement direction X. The pair of rejoinable parts 13 is divided from each other via the notch part 12b and the like described above or a slit shape in the arrangement direction X. As described later, the pair of rejoinable parts 13 is portions that are joined to each other by a joining member 15R to constitute a conductive connection part 16R for secondary use at the time of reusing the bus bar module 1 and the battery module 110 (refer to FIG. 4 and FIG. 5). Herein, each of the pair of rejoinable parts 13 is formed to be a welding region having a substantially rectangular shape.

The pair of electrode joining parts 11 and the coupling part 12 configured as described above constitute a conductive connection part 14 for primary use that is disposed across the different electrode terminals 114 to electrically connect the different electrode terminals 114 to each other in a state before being reused. The conductive connection part 14 for primary use is a portion that conductively connects the electrode terminal 114 of one of the adjacent battery cells 112 to the electrode terminal 114 of the other one of the battery cells 112 in the bus bar module 1 before being reused. The conductive connection part 14 for primary use extends across the electrode terminal 114 of one of the battery cells 112 adjacent to each other along the arrangement direction X and the electrode terminal 114 of the other one of the battery cells 112, and the respective electrode joining parts 11 are joined (welded) to the different electrode terminals 114.

The case 20 houses and holds the bus bars 10 configured as described above and arranged side by side along the arrangement direction X. The case 20 is configured such that a plurality of housing chambers for housing the bus bars 10 are arranged side by side along the arrangement direction X, and the housing chambers are coupled to each other via a displacement absorbing structure such as a hinge. The case 20 houses one bus bar 10 in each of the housing chambers, and holds each of the electrode joining parts 11 in an attitude that can be connected to the electrode terminal 114. Two cases 20 are disposed in total, that is, one case 20 is disposed for each of the electrode terminal groups 115. Each of the cases 20 includes the housing chambers the number of which corresponds to the number of the electrode terminals 114 constituting the electrode terminal group 115. Herein, one of the cases 20 also includes housing chambers that house and hold the total positive electrode bus bar 116 and the total negative electrode bus bar 117 described above.

The detection conductor 30 is electrically connected to each of the bus bars 10 configured as described above, and electrically connects each of the bus bars 10 to the monitoring device 120 described above. For example, the detection conductor 30 can be constituted of flexible printed circuits (FPCs). That is, in this case, the detection conductor 30 is constituted of a circuit body (conductor layer) constituting the flexible printed circuits. The detection conductor 30 is electrically connected to each of the bus bars 10 by being welded or fastened to the connection tab part 12a of the bus bar 10. For example, the detection conductor 30 may be electrically connected to the connection tab part 12a via a relay bus bar and the like. The detection conductor 30 is not necessarily constituted of flexible printed circuits, but may be constituted of an insulated electric wire and the like.

The bus bar module 1 configured as described above is assembled to the set battery 111 in a state in which the bus bars 10, the case 20, and the detection conductor 30 are modularized, and the electrode joining parts 11 are respectively joined to the electrode terminals 114 to configure the battery module 110.

With this configuration, at the time of primary use before being reused, the bus bar module 1 conductively connects the electrode terminals 114 of the adjacent battery cells 112 to each other via the conductive connection part 14 for primary use of each of the bus bars 10. The bus bar module 1 can electrically connect each of the battery cells 112 to the monitoring device 120 by electrically connecting each of the bus bars 10 to the monitoring device 120 via the detection conductor 30.

Next, the following describes the bus bar module 1 (reused bus bar module 1R) and the battery module 110 (reused battery module 110R) after being reused with reference to FIG. 4 and FIG. 5. The reused bus bar module 1R illustrated in FIG. 4 and FIG. 5 is the bus bar module 1 applied to the reused battery module 110R, and includes the reused bus bar 10R obtained by performing predetermined reuse processing on the bus bar 10 before being reused.

Specifically, the reused bus bar 10R is formed by cutting the coupling part 12 between the pair of electrode joining parts 11 to divide the pair of electrode joining parts 11 from each other in a state in which the pair of electrode joining parts 11 is respectively joined (welded) to the electrode terminals 114 in the bus bar 10 before being reused. That is, the coupling part 12 constituting the conductive connection part 14 for primary use in the bus bar 10 before being reused functions as a cutting (dividing) part for cutting (dividing) the pair of electrode joining parts 11 joined to the electrode terminals 114 from each other. In other words, the conductive connection part 14 for primary use in the bus bar 10 before being reused is divided into the pair of electrode joining parts 11 at the coupling part 12 for reuse. For example, the coupling part 12 is cut by using a cutting tool such as an insulated cutter. A cut trace generated in this process is formed on a cut end face of the coupling part 12. Accordingly, in the battery module 110, the battery cells 112 before being reused that are connected to each other via the conductive connection part 14 for primary use are caused to be in a state of being able to be separated from each other. Typically, in the bus bar module 1, each coupling part 12 of the bus bar 10 connected to the battery cell 112 that is required to be replaced is cut.

At this point, by cutting the coupling part 12 using any of the notch parts 12b disposed on the sides of the connection tab part 12a as a guide, the coupling part 12 can be easily cut while maintaining conductive connection between the connection tab part 12a and the detection conductor 30. In the drawing, it is assumed that the case 20 is not cut together with the bus bar 10, but the embodiment is not limited thereto. Part of the case 20 may be cut along with cutting of the coupling part 12.

The reused bus bar 10R is configured as a form of connecting the electrode terminal 114 of any of the battery cells 112 in a state of being able to be separated as described above, the battery cell 112 being able to be used as the reused battery cell 112R, to the electrode terminal 114 of the other battery cell 112.

More specifically, the reused battery module 110R is the battery module 110 including at least one reused battery cell 112R. The reused battery module 110R is configured such that the joining member 15R is joined to the rejoinable parts 13 respectively disposed on two battery cells (at least one of which is the reused battery cell 112R) of the battery cells 112 in a state of being able to be separated as the coupling part 12 is cut as described above.

In this case, in the reused bus bar 10R, the pair of electrode joining parts 11 divided from each other, the pair of rejoinable parts 13, and the joining member 15R constitute the conductive connection part 16R for secondary use that is disposed across the different electrode terminals 114 to electrically connect the different electrode terminals 114 to each other.

That is, in this case, the reused bus bar 10R includes the pair of electrode joining parts 11 that is respectively joined (welded) to the different electrode terminals 114 and divided from each other, the pair of rejoinable parts 13 respectively extending from the pair of electrode joining parts 11, and the joining member 15R that is joined to the pair of rejoinable parts 13. Herein, the pair of rejoinable parts 13 typically functions as welding regions of new surfaces, each of which is free of welding trace and the like. For example, the joining member 15R according to the present embodiment is electrically connected to the pair of rejoinable parts 13 by being welded to the pair of rejoinable parts 13 (for example, by laser welding and the like).

The pair of electrode joining parts 11, the pair of rejoinable parts 13, and the joining member 15R configured as described above constitute the conductive connection part 16R for secondary use that is disposed across the different electrode terminals 114 to electrically connect the different electrode terminals 114 to each other in a state after being reused. The conductive connection part 16R for secondary use is a portion that conductively connects the electrode terminal 114 of the reused battery cell 112R to the electrode terminal 114 of the battery cell 112 adjacent thereto (this may also be the reused battery cell 112R) in the reused bus bar module 1R after being reused. The conductive connection part 16R for secondary use extends across the electrode terminal 114 of one of the battery cells 112 adjacent to each other along the arrangement direction X and the electrode terminal 114 of the other one of the battery cells 112 via the joining member 15R, and the electrode joining parts 11 are maintained to be respectively joined to the different electrode terminals 114.

The reused bus bar module 1R configured as described above conductively connects the electrode terminals 114 of the adjacent battery cells 112 including the reused battery cell 112R to each other via the conductive connection part 16R for secondary use of the reused bus bar 10R at the time of secondary use after being reused. The reused bus bar module 1R can electrically connect each of the battery cells 112 including the reused battery cell 112R to the monitoring device 120 by electrically connecting each of the bus bars 10 including the reused bus bar 10R to the monitoring device 120 via the detection conductor 30.

Next, the following describes a manufacturing method for the reused battery module 110R configured as described above (manufacturing method for the reused battery module) with reference to FIG. 6. The description will be made based on a flowchart of FIG. 6 while appropriately referring to the other drawings. The manufacturing method for the reused battery module 110R described below may be manually performed by a worker using various kinds of devices, equipment, jigs, and the like, or may be automatically performed by various manufacturing devices.

The manufacturing method for the reused battery module 110R according to the present embodiment includes a connection step for primary use (Step S1), a cutting step (Step S2), and a connection step for secondary use (Step S3). The connection step for primary use (Step S1) is a step of causing the battery module 110 to be in a state of being able to be primarily used. The cutting step (Step S2) is a step of cutting the coupling part 12 of the bus bar 10 for replacing at least part of the battery cells 112 in the battery module 110 that has been primarily used. The connection step for secondary use (Step S3) is a step of causing the reused battery module 110R to be in a state of being able to be secondarily used, the reused battery module 110R using, as the reused battery cell 112R, at least one of the battery cells 112 constituting the battery module 110 that has been primarily used. In the following description, the manufacturing method for the reused battery module 110R is assumed to be manually performed by a worker.

First, as the connection step for primary use, the worker assembles the bus bar module 1 to the set battery 111, the bus bar module 1 in which the bus bars 10, the case 20, and the detection conductor 30 are modularized. The worker joins (herein, welds) the pair of electrode joining parts 11 of each of the bus bars 10 in the bus bar module 1 to the different electrode terminals 114 respectively, configures the conductive connection part 14 for primary use with the pair of electrode joining parts 11 and the coupling part 12, and configures the battery module 110 with the battery cells 112 (Step S1). Accordingly, at the time of primary use, the bus bar module 1 conductively connects the electrode terminals 114 of the adjacent battery cells 112 to each other via the conductive connection part 14 for primary use of each of the bus bars 10. The worker then electrically connects each of the battery cells 112 to the monitoring device 120 by electrically connecting each of the bus bars 10 to the monitoring device 120 via the detection conductor 30.

Next, in the battery module 110 that has been primarily used, as the cutting step, the worker cuts the coupling part 12 between the pair of electrode joining parts 11 to divide the pair of electrode joining parts 11 from each other in a state in which the pair of electrode joining parts 11 is respectively joined to the electrode terminals 114, and causes the battery cells 112 constituting the battery module 110 to be in a state of being able to be separated from each other (Step S2).

Next, as the connection step for secondary use, the worker replaces, with the reused battery cell 112R, the battery cell 112 that is required to be replaced among the battery cells 112 in a state of being able to be separated, and joins the joining member 15R to the rejoinable parts 13 respectively disposed on the two battery cells 112 including the replaced reused battery cell 112R. Herein, the worker electrically connects the joining member 15R to the pair of rejoinable parts 13 by welding (for example, by laser welding and the like) the joining member 15R to the pair of rejoinable parts 13. Accordingly, the worker configures the conductive connection part 16R for secondary use with the pair of electrode joining parts 11, the pair of rejoinable parts 13, and the joining member 15R, configures the reused battery module 110R including at least the replaced reused battery cell 112R (Step S3), and ends the manufacturing method for the reused battery module 110R.

The manufacturing method for the reused battery module described above includes the connection step for primary use (Step S1), the cutting step (Step S2), and the connection step for secondary use (Step S3). In the bus bar module 1 and the battery module 110 at the time of primary use, the bus bar 10 includes the pair of rejoinable parts 13 together with the coupling part 12 that can be cut between the pair of electrode joining parts 11 in a state in which the pair of electrode joining parts 11 is respectively joined to the electrode terminals 114, and the pair of electrode joining parts 11 and the coupling part 12 constitute the conductive connection part 14 for primary use. On the other hand, regarding the reused bus bar module 1R and the reused battery module 110R at the time of secondary use, in the reused bus bar 10R, the pair of electrode joining parts 11, the pair of rejoinable parts 13, and the joining member 15R constitute the conductive connection part 16R for secondary use in a state in which the pair of electrode joining parts is respectively joined to the different electrode terminals 114 and divided from each other. In this case, the rejoinable parts 13 are prepared separately from the electrode joining part 11, and can be used as a region of a new surface free of welding trace and the like, so that the joining member 15R can be appropriately brought into contact with and joined to the rejoinable part 13, and an appropriate conductively connected state can be secured.

That is, with the bus bar module 1, the battery module 110, and the manufacturing method for the reused battery module, the rejoinable part 13 is added to the bus bar 10 as described above, the coupling part 12 of the bus bar 10 is subjected to the cut processing at the time of reuse, and the joining member 15R is joined to the rejoinable part 13, so that the battery cell 112 can be appropriately reused.

For example, with the battery module 110 in which the battery cells 112 are connected to each other by welding and the like via the bus bar 10, at the time of extracting the reusable battery cell 112, it is difficult to join the battery cell 112 to the bus bar 10 again after taking off the battery cell 112 from the bus bar 10. On the other hand, the bus bar module 1 and the battery module 110 according to the present embodiment have a configuration in which the battery cell 112 is replaced after cutting the coupling part 12 as described above, and the usable battery cells 112 can be connected to each other again via the rejoinable part 13 and the joining member 15R, so that it is possible to appropriately recycle and reuse the battery cell 112 that is still usable.

As a result, the bus bar module 1, the battery module 110, and the manufacturing method for the reused battery module can implement a configuration that can be appropriately and easily reused, and can suppress increase in battery discarding processing and reduce a discarding amount.

The manufacturing method for the reused battery module, the bus bar module 1, and the battery module 110 described above include the notch part 12b formed at a part that can be cut on the coupling part 12, so that, at the time of cutting the coupling part 12, the coupling part 12 can be cut at an appropriate position using the notch part 12b as a guide. Herein, by cutting the coupling part 12 using any of the notch parts 12b disposed on the sides of the connection tab part 12a as a guide, the coupling part 12 can be cut while maintaining conductive connection between the connection tab part 12a and the detection conductor 30. As a result, the manufacturing method for the reused battery module, the bus bar module 1, and the battery module 110 can improve workability in manufacturing the reused battery module 110R.

The bus bar module, the battery module, and the manufacturing method for the reused battery module according to the embodiment of the present invention described above are not limited to the embodiment described above, and can be variously modified within the scope of claims.

In the above description, the notch part 12b is assumed to be formed as a part notched in a recessed shape along the width direction Y, but the shape thereof is not limited thereto. Additionally, the coupling part 12 is assumed to include the notch part 12b in the above description, but the embodiment is not limited thereto. The coupling part 12 may be configured without the notch part 12b.

In the above description, the rejoinable part 13 is assumed to be formed as a welding region having a substantially rectangular shape, but the embodiment is not limited thereto. The joining form between the rejoinable part 13 and the joining member 15R is not limited to weld-bonding.

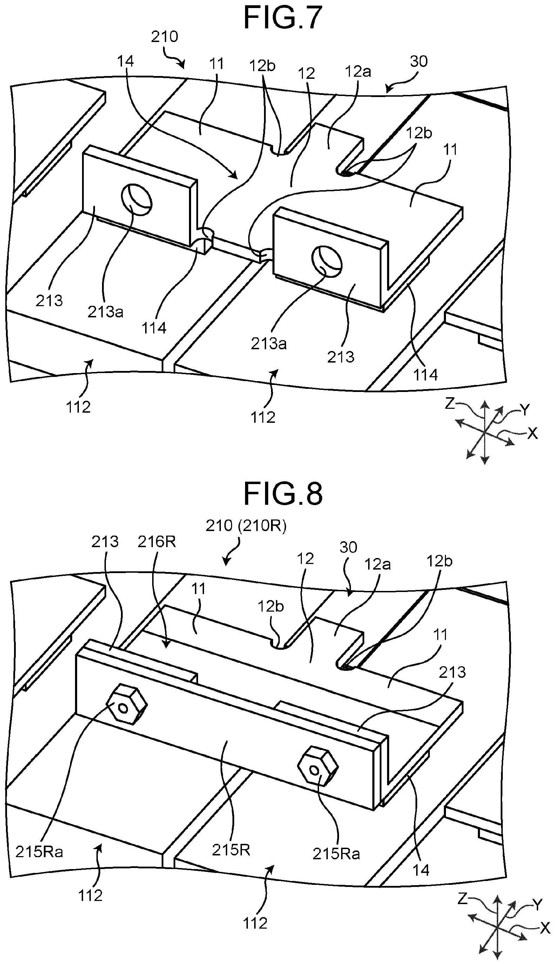

A bus bar 210 (reused bus bar 210R) according to a modification illustrated in FIG. 7 and FIG. 8 is different from the bus bar 10 described above in that the bus bar 210 (reused bus bar 210R) includes rejoinable parts 213 in place of the rejoinable parts 13. Additionally, the reused bus bar 210R according to the present modification is different from the reused bus bar 10R described above in that the reused bus bar 210R includes a joining member 215R in place of the joining member 15R. Other configurations of the bus bar 210 and the reused bus bar 210R are substantially the same as those of the bus bar 10 and the reused bus bar 10R described above.

As the form of joining between the rejoinable part 213 and the joining member 215R according to the present modification, bolt-joining is employed in place of weld-bonding.

Specifically, similarly to the rejoinable parts 13, the pair of rejoinable parts 213 are portions respectively extending from the pair of electrode joining parts 11. Herein, the pair of rejoinable parts 213 respectively extends from the pair of electrode joining parts 11 while being bent toward one side along the height direction Z, and is formed integrally with the electrode joining parts 11. That is, a first rejoinable part 213 of the pair of rejoinable parts 213 is disposed to be connected to the first electrode joining part 11, and extends from the first electrode joining part 11 while being bent along the height direction Z. On the other hand, a second rejoinable part 213 of the pair of rejoinable parts 213 is disposed to be connected to the second electrode joining part 11, and extends from the second electrode joining part 11 along the height direction Z. Herein, each of the pair of rejoinable parts 213 is formed as a bolt-joining region having a substantially rectangular shape, and includes a bolt insertion hole 213a passing therethrough along the width direction Y at a center part. Each of the pair of rejoinable parts 213 typically functions as a bolt-joining region of a new surface free of welding trace and the like.

The joining member 215R according to the present modification is joined to the pair of rejoinable parts 213 via a fastening member 215Ra such as a bolt or a nut. At the connection step for secondary use (Step S3) described above, the worker electrically connects the joining member 215R to the pair of rejoinable parts 213 by bolt-joining the joining member 215R to the pair of rejoinable parts 213 via the fastening member 215Ra. As a result, in the reused bus bar 210R, the pair of electrode joining parts 11 divided from each other, the pair of rejoinable parts 213, and the joining member 215R constitute a conductive connection part 216R for secondary use that is disposed across the different electrode terminals 114 to electrically connect the different electrode terminals 114 to each other.

Even in this case, with the bus bar module 1, the battery module 110, and the manufacturing method for the reused battery module, the rejoinable part 213 is added to the bus bar 210 as described above, the coupling part 12 of the bus bar 210 is subjected to the cut processing at the time of reuse, and the joining member 215R is joined to the rejoinable part 213, so that the battery cell 112 can be appropriately reused.

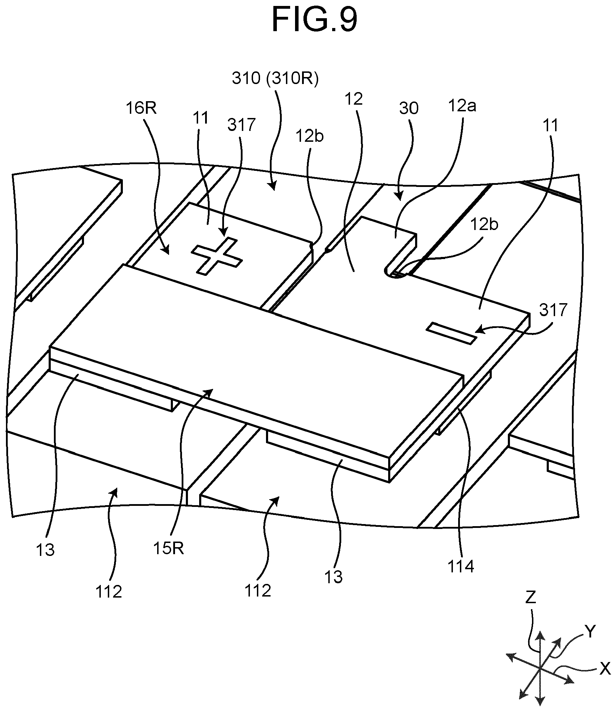

The bus bar module 1 described above may include a polarity symbol part 317 as exemplified in FIG. 9.

In a bus bar 310 (reused bus bar 310R) according to a modification illustrated in FIG. 9, the electrode joining part 11 or the rejoinable part 13 extending from the electrode joining part 11 includes the polarity symbol part 317. The polarity symbol part 317 is a portion representing polarity of the electrode terminal 114 to which the electrode joining part 11 is joined (welded). In the drawing, the polarity symbol part 317 is assumed to be disposed on the electrode joining part 11, but may be disposed on the rejoinable part 13. For example, the polarity symbol part 317 is formed as a symbol having a concave-convex shape on the electrode joining part 11. On the electrode joining part 11 joined to the electrode terminal 114 constituting a positive electrode, the polarity symbol part 317 is configured by a symbol "+ (plus)" representing the positive electrode, for example. On the other hand, on the electrode joining part 11 joined to the electrode terminal 114 constituting a negative electrode, the polarity symbol part 317 is configured by a symbol "- (minus)" representing the negative electrode, for example.

In this case, the bus bar module 1, the battery module 110, and the manufacturing method for the reused battery module can enable the worker to easily grasp the polarity of the electrode terminal 114 to which the electrode joining part 11 is joined by visual check in a state in which the coupling part 12 is cut and the pair of electrode joining parts 11 is divided from each other, that is, in a state in which the battery cells 112 constituting the battery module 110 can be separated from each other. As a result, with the bus bar module 1, the battery module 110, and the manufacturing method for the reused battery module, the reused battery module 110R can be manufactured without mistaking the polarity of the electrode terminal 114.

The bus bar module, the battery module, and the manufacturing method for the reused battery module according to the present embodiment may be configured by appropriately combining the constituent elements in the embodiment and the modifications described above.

The bus bar module, the battery module, and the manufacturing method for a reused battery module according to the present embodiment exhibit an effect of being able to be appropriately reused.

## Claims

1. A bus bar module (1) comprising:
a bus bar (10) configured to electrically connect electrode terminals (114) respectively included in a plurality of battery cells (112); and
a detection conductor (30) configured to be electrically connected to the bus bar (10), wherein
the bus bar (10) includes
a pair of electrode joining parts (11) respectively joined to the different electrode terminals (114),
a coupling part (12) configured to couple the pair of electrode joining parts (11) to each other, and to be able to be cut between the pair of electrode joining parts (11) in a state in which the pair of electrode joining parts (11) is respectively joined to the electrode terminals (114), and
a pair of rejoinable parts (13) are portions respectively extending from the pair of electrode joining parts (11) along a width direction (Y), wherein
the pair of electrode joining parts (11), the coupling part (12) and the pair of rejoinable parts (13) are integrally formed of metallic material having electrical conductivity, wherein
the bus bar (10) is formed in a U-shaped plate shape as a whole by the pair of electrode joining parts (11), the coupling part (12), and the pair of rejoinable parts (13), wherein
the coupling part (12) includes a connection tab part (12a) and a notch part (12b), wherein the connection tab part (12a) is a portion to which the detection conductor (30) is electrically connected and which is formed to project from a center portion in an arrangement direction (X) of the coupling part (12) toward one side along the width direction (Y) to have a plate shape, and the notch part (12b) is formed as a part notched in a recessed shape along the width direction (Y),
wherein the notch parts (12b) are respectively disposed on both sides in the arrangement direction (X) of the connection tab part (12a) in the coupling part (12), wherein the notch parts (12b) are disposed, as a pair, on both sides of the coupling part (12) to be opposed to each other in the width direction (Y), so that the pair of the notch parts (12b) opposed to each other in the width direction (Y) is assumed to be one group, and two groups of the notch parts (12b) are respectively disposed on both sides in the arrangement direction (X) of the connection tab part (12a),
and
the pair of electrode joining parts (11) and the coupling part (12) constitute a conductive connection part (14) that is disposed across the different electrode terminals (114) to electrically connect the different electrode terminals (114) to each other.

2. The bus bar module (1) according to claim 1, wherein
the coupling part (12) includes the notch part (12b) formed at a part that is able to be cut.

3. The bus bar module (1) according to claim 1 or 2, wherein
the electrode joining part (11) or the rejoinable part (13) extending from the electrode joining part (11) includes a polarity symbol part (317) representing polarity of the electrode terminal (114) to which the electrode joining part (11) is joined.

4. A battery module (110) comprising:
a plurality of battery cells (112); and
a bus bar module (1) according to claim 1 configured to be electrically connected to the battery cells (112).

5. A reused bus bar module (1R) comprising:
a reused bus bar (10R) configured to electrically connect electrode terminals (114) respectively included in a plurality of reused battery cells (112R); and
a detection conductor (30) configured to be electrically connected to the reused bus bar (10R), wherein
the reused bus bar (10R) includes
a pair of electrode joining parts (11) joined to the different electrode terminals (114) and divided from each other,
a pair of rejoinable parts (13) respectively extending from the pair of electrode joining parts (11) along a width direction (Y) and is formed integrally with the electrode joining parts (11),
wherein the pair of electrode joining parts (11) and the pair of the rejoinable parts (13) are made of metallic material having electrical conductivity,
a coupling part (12) including a connection tab part (12a) and a notch part (12b), wherein the connection tab part (12a) is a portion to which the detection conductor (30) is electrically connected and which is formed to project from a center portion in an arrangement direction (X) of the coupling part (12) toward one side along the width direction (Y) to have a plate shape, and the notch part (12b) is formed as a part notched in a recessed shape along the width direction (Y),
wherein, the reused bus bar (10R) is formed by cutting the coupling part (12) between the pair of electrode joining parts (11) to divide the pair of electrode joining parts (11) from each other in a state in which the pair of electrode joining parts (11) respectively joined to the electrode terminals (114) in the bus bar before being reused, wherein
the rejoinable parts (13) are separated as the coupling part (12) is cut,
a joining member (15R) joined to the pair of rejoinable parts (13) by being welded to the pair of rejoinable parts (13), wherein
the pair of electrode joining parts (11), the pair of rejoinable parts (13), and the joining member (15R) constitute a conductive connection part (16R) that is disposed across the different electrode terminals (114) to electrically connect the different electrode terminals (114) to each other.

6. A reused battery module (110R) comprising:
a plurality of reused battery cells (112R); and
a reused bus bar module (1R) according to claim 5 configured to be electrically connected to the reused battery cells (112R).

7. A manufacturing method for the reused battery module (110R) according to claim 6, the manufacturing method comprising:
a connection step for primary use (S1), joining a pair of electrode joining parts (11) of a bus bar module (1) to respective different electrode terminals (114), the bus bar module (1) including a bus bar (10, 210, 310) configured to electrically connect electrode terminals (114) respectively included in a plurality of battery cells (112) and a detection conductor (30) configured to be electrically connected to the bus bar (10, 210, 310), the bus bar (10, 210, 310) including the pair of electrode joining parts (11) respectively joined to the different electrode terminals (114), a coupling part (12) configured to couple the pair of electrode joining parts (11) to each other, and a pair of rejoinable parts (13, 213) respectively extending from the pair of electrode joining parts (11), configuring a conductive connection part (14) that is disposed across the different electrode terminals (114) to electrically connect the different electrode terminals (114) to each other by the pair of electrode joining parts (11) and the coupling part (12), and configuring a battery module (110) by the battery cells (112);
a cutting step (S2), cutting the coupling part (12) between the pair of electrode joining parts (11) to divide the pair of electrode joining parts (11) from each other in a state in which the pair of electrode joining parts (11) is respectively joined to the electrode terminals (114), and causing the battery cells (112) constituting the battery module (110) to be in a state of being able to be separated from each other; and
a connection step for secondary use (S3), replacing the battery cell (112) that is required to be replaced among the battery cells (112) in a state of being able to be separated, joining a joining member (15R, 215R) to the rejoinable parts (13, 213) respectively disposed on the two battery cells (112, 112R) including the replaced battery cell (112R), configuring a conductive connection part (16R, 216R) that is disposed across the different electrode terminals (114) to electrically connect the different electrode terminals (114) to each other by the pair of electrode joining parts (11), the pair of rejoinable parts (13, 213), and the joining member (15R, 215R), and configuring a reused battery module (110R) including at least the replaced battery cell (112R).

## Patentansprüche

1. Sammelschienenmodul (1), umfassend: eine Sammelschiene (10), die so konfiguriert ist, dass sie Elektrodenanschlüsse (114), die jeweils in einer Vielzahl von Batteriezellen (112) enthalten sind, elektrisch verbindet; und einen Erfassungsleiter (30), der so konfiguriert ist, dass er elektrisch mit der Sammelschiene (10) verbunden ist, wobei die Sammelschiene (10) Folgendes umfasst
ein Paar von Elektrodenverbindungsteilen (11), die jeweils mit den verschiedenen Elektrodenanschlüssen (114) verbunden sind
ein Kopplungsteil (12), das so konfiguriert ist, dass es das Paar von Elektrodenverbindungsteilen (11) miteinander koppelt und in einem Zustand, in dem das Paar von Elektrodenverbindungsteilen (11) jeweils mit den Elektrodenanschlüssen (114) verbunden ist, zwischen dem Paar von Elektrodenverbindungsteilen (11) geschnitten werden kann, und
ein Paar von wieder verbindbaren Teilen (13) Abschnitte sind, die sich jeweils von dem Paar von Elektrodenverbindungsteilen (11) entlang einer Breitenrichtung (Y) erstrecken, wobei
das Paar von Elektrodenverbindungsteilen (11), das Kopplungsteil (12) und das Paar von wieder verbindbaren Teilen (13) einstückig aus einem metallischen Material mit elektrischer Leitfähigkeit gebildet sind, wobei
die Stromschiene (10) in einer U-förmigen Plattenform als Ganzes durch das Paar von Elektrodenverbindungsteilen (11), das Kopplungsteil (12) und das Paar von wieder verbindbaren Teilen (13) gebildet wird, wobei
das Kopplungsteil (12) ein Verbindungslaschen-Teil (12a) und ein Kerben-Teil (12b) enthält, wobei das Verbindungslaschen-Teil (12a) ein Abschnitt ist, mit dem der Erfassungsleiter (30) elektrisch verbunden ist und der so ausgebildet ist, dass er von einem Mittelabschnitt in einer Anordnungsrichtung (X) des Kopplungsteils (12) in Richtung einer Seite entlang der Breitenrichtung (Y) vorsteht, um eine Plattenform zu haben, und das Kerben-Teil (12b) als ein Teil ausgebildet ist, das in einer vertieften Form entlang der Breitenrichtung (Y) gekerbt ist,
wobei die Kerbenteile (12b) jeweils auf beiden Seiten in der Anordnungsrichtung (X) des Verbindungslaschenteils (12a) in dem Kopplungsteil (12) angeordnet sind, wobei die Kerbenteile (12b) als ein Paar auf beiden Seiten des Kopplungsteils (12) angeordnet sind, um in der Breitenrichtung (Y) einander gegenüberzuliegen, so dass das Paar der Kerbenteile (12b), die einander in der Breitenrichtung (Y) gegenüberliegen, als eine Gruppe angenommen wird, und zwei Gruppen der Kerbenteile (12b) jeweils auf beiden Seiten in der Anordnungsrichtung (X) des Verbindungslaschenteils (12a) angeordnet sind,
und das Paar von Elektrodenverbindungsteilen (11) und das Kopplungsteil (12) ein leitendes Verbindungsteil (14) bilden, das über den verschiedenen Elektrodenanschlüssen (114) angeordnet ist, um die verschiedenen Elektrodenanschlüsse (114) elektrisch miteinander zu verbinden.

2. Sammelschienenmodul (1) nach Anspruch 1, wobei
der Kopplungsteil (12) den Kerbenteil (12b) enthält, der an einem Teil ausgebildet ist, der geschnitten werden kann.

3. Sammelschienenmodul (1) nach Anspruch 1 oder 2, wobei
das Elektrodenverbindungsteil (11) oder das wiederverbindbare Teil (13), das sich von dem Elektrodenverbindungsteil (11) erstreckt, ein Polaritätssymbolteil (317) enthält, das die Polarität des Elektrodenanschlusses (114) darstellt, mit dem das Elektrodenverbindungsteil (11) verbunden ist.

4. Batteriemodul (110), umfassend: eine Vielzahl von Batteriezellen (112); und ein Sammelschienenmodul (1) nach Anspruch 1, das so konfiguriert ist, dass es mit den Batteriezellen (112) elektrisch verbunden ist.

5. Wiederverwendetes Sammelschienenmodul (1R), das umfasst: eine wiederverwendete Sammelschiene (10R), die so konfiguriert ist, dass sie Elektrodenanschlüsse (114), die jeweils in einer Vielzahl wiederverwendeter Batteriezellen (112R) enthalten sind, elektrisch verbindet; und einen Erfassungsleiter (30), der so konfiguriert ist, dass er elektrisch mit der wiederverwendeten Sammelschiene (10R) verbunden wird, wobei die wiederverwendete Sammelschiene (10R) enthält
ein Paar von Elektrodenverbindungsteilen (11), die mit den verschiedenen Elektrodenanschlüssen (114) verbunden und voneinander getrennt sind,
ein Paar von wieder verbindbaren Teilen (13), die sich jeweils von dem Paar von Elektrodenverbindungsteilen (11) entlang einer Breitenrichtung (Y) erstrecken und einstückig mit den Elektrodenverbindungsteilen (11) ausgebildet sind,
wobei das Paar von Elektrodenverbindungsteilen (11) und das Paar der wieder verbindbaren Teile (13) aus einem metallischen Material mit elektrischer Leitfähigkeit hergestellt sind,
ein Kopplungsteil (12), das einen Verbindungszungenabschnitt (12a) und einen Einkerbungsabschnitt (12b) enthält, wobei der Verbindungszungenabschnitt (12a) ein Abschnitt ist, mit dem der Erfassungsleiter (30) elektrisch verbunden ist und der so ausgebildet ist, dass er von einem Mittelabschnitt in einer Anordnungsrichtung (X) des Kopplungsteils (12) in Richtung einer Seite entlang der Breitenrichtung (Y) vorsteht, um eine Plattenform zu haben, und der Einkerbungsabschnitt (12b) als ein in einer vertieften Form entlang der Breitenrichtung (Y) eingekerbter Teil ausgebildet ist,
wobei die wiederverwendete Sammelschiene (10R) durch Schneiden des Kopplungsteils (12) zwischen dem Paar von Elektrodenverbindungsteilen (11) gebildet wird, um das Paar von Elektrodenverbindungsteilen (11) in einem Zustand voneinander zu trennen, in dem das Paar von Elektrodenverbindungsteilen (11) jeweils mit den Elektrodenanschlüssen (114) in der Sammelschiene vor der Wiederverwendung verbunden ist, wobei
die wieder verbindbaren Teile (13) getrennt werden, wenn das Kopplungsteil (12) geschnitten wird,
ein Verbindungselement (15R), das mit dem Paar von wieder verbindbaren Teilen (13) verbunden ist, indem es an das Paar von wieder verbindbaren Teilen (13) geschweißt wird, wobei
das Paar von Elektrodenverbindungsteilen (11), das Paar von wieder verbindbaren Teilen (13) und das Verbindungselement (15R) ein leitendes Verbindungsteil (16R) bilden, das über den verschiedenen Elektrodenanschlüssen (114) angeordnet ist, um die verschiedenen Elektrodenanschlüsse (114) elektrisch miteinander zu verbinden.

6. Wiederverwendetes Batteriemodul (110R), umfassend: eine Vielzahl von wiederverwendeten Batteriezellen (112R); und ein wiederverwendetes Sammelschienenmodul (1R) nach Anspruch 5, das so konfiguriert ist, dass es mit den wiederverwendeten Batteriezellen (112R) elektrisch verbunden wird.

7. Herstellungsverfahren für das wiederverwendete Batteriemodul (110R) nach Anspruch 6, wobei das Herstellungsverfahren umfasst: einen Verbindungsschritt für die primäre Verwendung (S1), der ein Paar von Elektrodenverbindungsteilen (11) eines Sammelschienenmoduls (1) mit jeweiligen unterschiedlichen Elektrodenanschlüssen (114) verbindet, wobei das Sammelschienenmodul (1) eine Sammelschiene (10, 210, 310), die so konfiguriert ist, dass sie Elektrodenanschlüsse (114), die jeweils in einer Vielzahl von Batteriezellen (112) enthalten sind, elektrisch verbindet, und einen Erfassungsleiter (30) enthält, der so konfiguriert ist, dass er elektrisch mit der Sammelschiene (10, 210, 310) verbunden wird, wobei die Sammelschiene (10, 210, 310) das Paar von Elektrodenverbindungsteilen (11) enthält, die jeweils mit den unterschiedlichen Elektrodenanschlüssen (114) verbunden sind, ein Kopplungsteil (12), das so konfiguriert ist, dass es das Paar von Elektrodenverbindungsteilen (11) miteinander koppelt, und ein Paar von wieder verbindbaren Teilen (13, 213), die sich jeweils von dem Paar von Elektrodenverbindungsteilen (11) erstrecken, Konfigurieren eines leitenden Verbindungsteils (14), das über den verschiedenen Elektrodenanschlüssen (114) angeordnet ist, um die verschiedenen Elektrodenanschlüsse (114) durch das Paar von Elektrodenverbindungsteilen (11) und das Kopplungsteil (12) elektrisch miteinander zu verbinden, und Konfigurieren eines Batteriemoduls (110) durch die Batteriezellen (112); einen Schneideschritt (S2), der das Kopplungsteil (12) zwischen dem Paar von Elektrodenverbindungsteilen (11) schneidet, um das Paar von Elektrodenverbindungsteilen (11) in einem Zustand voneinander zu trennen, in dem das Paar von Elektrodenverbindungsteilen (11) jeweils mit den Elektrodenanschlüssen (114) verbunden ist, und bewirkt, dass die Batteriezellen (112), die das Batteriemodul (110) bilden, in einem Zustand sind, in dem sie voneinander getrennt werden können; und einen Verbindungsschritt für eine sekundäre Verwendung (S3), Ersetzen der Batteriezelle (112), die ersetzt werden muss, unter den Batteriezellen (112) in einem Zustand, in dem sie getrennt werden können, Verbinden eines Verbindungselements (15R, 215R) mit den wieder verbindbaren Teilen (13, 213), die jeweils an den beiden Batteriezellen (112, 112R) einschließlich der ersetzten Batteriezelle (112R) angeordnet sind, Konfigurieren eines leitenden Verbindungsteils (16R, 216R), das über den verschiedenen Elektrodenanschlüssen (114) angeordnet ist, um die verschiedenen Elektrodenanschlüsse (114) durch das Paar von Elektrodenverbindungsteilen (11), das Paar von wieder verbindbaren Teilen (13, 213) und das Verbindungselement (15R, 215R) elektrisch miteinander zu verbinden, und Konfigurieren eines wiederverwendeten Batteriemoduls (110R), das zumindest die ersetzte Batteriezelle (112R) enthält.

## Revendications

1. Module de barre omnibus (1) comprenant :
une barre omnibus (10) configurée pour connecter électriquement des bornes d'électrodes (114) respectivement incluses dans une pluralité d'éléments de batterie (112) ; et
un conducteur de détection (30) configuré pour être connecté électriquement à la barre omnibus (10), dans lequel
la barre omnibus (10) inclut
une paire de parties de jonction d'électrodes (11) respectivement reliées aux différentes bornes d'électrodes (114),
une partie de couplage (12) configurée pour coupler la paire de parties de jonction d'électrodes (11) l'une à l'autre, et pour pouvoir être coupée entre la paire de parties de jonction d'électrodes (11) dans un état dans lequel la paire de parties de jonction d'électrodes (11) est respectivement jointe aux bornes d'électrodes (114), et
une paire de parties joignables (13) sont des parties s'étendant respectivement à partir de la paire de parties de jonction d'électrodes (11) le long d'une direction de largeur (Y), dans lequel
la paire de parties de jonction d'électrodes (11), la partie de couplage (12) et la paire de parties joignables (13) sont intégralement formées d'un matériau métallique ayant une conductivité électrique, dans lequel
la barre omnibus (10) est formée en forme de plaque en U dans son ensemble par la paire de parties de jonction d'électrodes (11), la partie de couplage (12) et la paire de parties joignables (13), dans lequel
la partie de couplage (12) inclut une partie de languette de connexion (12a) et une partie d'encoche (12b), dans lequel la partie de languette de connexion (12a) est une partie à laquelle le conducteur de détection (30) est électriquement connecté et qui est formée pour faire saillie à partir d'une partie centrale dans une direction d'agencement (X) de la partie de couplage (12) vers un côté le long de la direction de largeur (Y) pour avoir une forme de plaque, et la partie d'encoche (12b) est formée comme une partie encochée dans une forme en retrait le long de la direction de largeur (Y),
dans lequel les parties d'encoche (12b) sont respectivement disposées des deux côtés dans la direction d'agencement (X) de la partie de languette de connexion (12a) dans la partie de couplage (12), dans lequel les parties d'encoche (12b) sont disposées, en tant que paire, des deux côtés de la partie de couplage (12) pour être opposées l'une à l'autre dans la direction de largeur (Y), de sorte que la paire de parties d'encoche (12b) opposées l'une à l'autre dans la direction de largeur (Y) est supposée constituer un groupe, et que deux groupes de parties d'encoche (12b) sont respectivement disposés des deux côtés dans la direction d'agencement (X) de la partie de languette de connexion (12a), et
la paire de parties de jonction d'électrodes (11) et la partie de couplage (12) constituent une partie de connexion conductrice (14) qui est disposée entre les différentes bornes d'électrodes (114) pour connecter électriquement les différentes bornes d'électrodes (114) l'une à l'autre.

2. Module de barre omnibus (1) selon la revendication 1, dans lequel
la partie de couplage (12) inclut la partie d'encoche (12b) formée sur une partie pouvant être découpée.

3. Module de barre omnibus (1) selon la revendication 1 ou 2, dans lequel
la partie de jonction d'électrodes (11) ou la partie joignable (13) s'étendant à partir de la partie de jonction d'électrodes (11) inclut une partie de symbole de polarité (317) représentant la polarité de la borne d'électrode (114) à laquelle la partie de jonction d'électrodes (11) est jointe.

4. Module de batterie (110) comprenant :
une pluralité d'éléments de batterie (112) ; et
un module de barre omnibus (1) selon la revendication 1, configuré pour être connecté électriquement aux éléments de batterie (112).

5. Module de barre omnibus réutilisée (1R) comprenant :
une barre omnibus réutilisée (10R) configurée pour connecter électriquement des bornes d'électrodes (114) respectivement incluses dans une pluralité d'éléments de batterie réutilisés (112R) ; et
un conducteur de détection (30) configuré pour être connecté électriquement à la barre omnibus réutilisée (10R), dans lequel
la barre omnibus réutilisée (10R) inclut
une paire de parties de jonction d'électrodes (11) reliées aux différentes bornes d'électrodes (114) et séparées l'une de l'autre,
une paire de parties joignables (13) s'étendant respectivement à partir de la paire de parties de jonction d'électrodes (11) le long d'une direction de largeur (Y) et est formée intégralement avec les parties de jonction d'électrodes (11),
dans lequel la paire de parties de jonction d'électrodes (11) et la paire de parties joignables (13) sont constituées d'un matériau métallique ayant une conductivité électrique,
une partie de couplage (12) incluant une partie de languette de connexion (12a) et une partie d'encoche (12b), dans lequel la partie de languette de connexion (12a) est une partie à laquelle le conducteur de détection (30) est électriquement connecté et qui est formée pour faire saillie à partir d'une partie centrale dans une direction d'agencement (X) de la partie de couplage (12) vers un côté le long de la direction de largeur (Y) pour avoir une forme de plaque, et la partie d'encoche (12b) est formée comme une partie encochée dans une forme en retrait le long de la direction de largeur (Y),
dans lequel la barre omnibus réutilisée (10R) est formée en coupant la partie de couplage (12) entre la paire de parties de jonction d'électrodes (11) pour séparer la paire de parties de jonction d'électrodes (11) l'une de l'autre dans un état dans lequel la paire de parties de jonction d'électrodes (11) est respectivement reliée aux bornes d'électrodes (114) dans la barre omnibus avant d'être réutilisée, dans lequel
les parties joignables (13) sont séparées au fur et à mesure que la partie de couplage (12) est coupée,
un élément de jonction (15R) relié à la paire de parties joignables (13) par soudage à la paire de parties joignables (13), dans lequel
la paire de parties de jonction d'électrodes (11), la paire de parties joignables (13) et l'élément de jonction (15R) constituent une partie de connexion conductrice (16R) qui est disposée entre les différentes bornes d'électrodes (114) pour connecter électriquement les différentes bornes d'électrodes (114) l'une à l'autre.

6. Module de batterie réutilisé (110R) comprenant :
une pluralité d'éléments de batterie réutilisés (112R) ; et
un module de barre omnibus réutilisée (1R) selon la revendication 5, configuré pour être connecté électriquement aux éléments de batterie réutilisés (112R).

7. Procédé de fabrication du module de batterie réutilisé (110R) selon la revendication 6, le procédé de fabrication comprenant :
une étape de connexion pour une utilisation primaire (S1), joignant une paire de parties de jonction d'électrodes (11) d'un module de barre omnibus (1) à des bornes d'électrodes (114) différentes, le module de barre omnibus (1) incluant une barre omnibus (10, 210, 310) configurée pour connecter électriquement des bornes d'électrodes (114) respectivement incluses dans une pluralité d'éléments de batterie (112) et un conducteur de détection (30) configuré pour être connecté électriquement à la barre omnibus (10, 210, 310), la barre omnibus (10, 210, 310) incluant la paire de parties de jonction d'électrodes (11) respectivement jointes aux différentes bornes d'électrodes (114), une partie de couplage (12) configurée pour coupler la paire de parties de jonction d'électrodes (11) l'une à l'autre, et une paire de parties joignables (13, 213) s'étendant respectivement à partir de la paire de parties de jonction d'électrodes (11), configurant une partie de connexion conductrice (14) qui est disposée à travers les différentes bornes d'électrodes (114) pour connecter électriquement les différentes bornes d'électrodes (114) l'une à l'autre par la paire de parties de jonction d'électrodes (11) et la partie de couplage (12), et configurant un module de batterie (110) par les éléments de batterie (112) ;
une étape de coupe (S2), coupant la partie de couplage (12) entre la paire de parties de jonction d'électrodes (11) pour séparer la paire de parties de jonction d'électrodes (11) l'une de l'autre dans un état dans lequel la paire de parties de jonction d'électrodes (11) est respectivement jointe aux bornes d'électrodes (114), et faisant en sorte que les éléments de batterie (112) constituant le module de batterie (110) soient dans un état où ils peuvent être séparés l'un de l'autre ; et
une étape de connexion pour une utilisation secondaire (S3), en remplaçant l'élément de batterie (112) qui doit être remplacé parmi les éléments de batterie (112) dans un état où ils peuvent être séparés, en joignant un élément de jonction (15R, 215R) aux parties joignables (13, 213) respectivement disposées sur les deux éléments de batterie (112, 112R) y compris l'élément de batterie remplacé (112R), en configurant une partie de connexion conductrice (16R, 216R) qui est disposée entre les différentes bornes d'électrodes (114) pour connecter électriquement les différentes bornes d'électrodes (114) l'une à l'autre par la paire de parties de jonction d'électrodes (11), la paire de parties joignables (13, 213) et l'élément de jonction (15R, 215R), et configurer un module de batterie réutilisé (110R) incluant au moins l'élément de batterie remplacé (112R).
